# DEMANDE DE BREVET EUROPEEN

(11) **EP 1 669 721 A1**
(43) Date de publication de la demande: **14.06.2006**
(21) Numéro de dépôt: 04028918.3
(22) Date de dépôt: 07.12.2004
(51) Int. Cl.: G01C 21/20, G01C 23/00, G04B 47/06, G04B 19/00

(54) **Pièce d'horlogerie constituant une aide à la navigation pour les aviateurs et les marins**

(71) Demandeur: Hamilton SA, 2543 Lengnau (CH)
(72) Inventeur: El Kadiri, Hakim, 2072 Saint-Blaise (CH)
(74) Mandataire: Ravenel, Thierry Gérard Louis

(57) **Abrégé**

Pièce d'horlogerie, notamment du type montre-bracelet (1), constituant une aide à la navigation pour les aviateurs ou les navigateurs, caractérisée en ce qu'elle comprend au moins deux lunettes concentriques (38, 46) dont l'une (46) au moins est tournante, l'une de ces lunettes (46) portant des premières indications (48) correspondant à la vitesse d'un avion, respectivement d'un bateau, et l'autre (38) portant des indications (50) relatives à la correction du cap à appliquer en cas de vent, un abaque (58) de calcul de la correction du cap étant reporté sur le dos de la montre (1) ou sur une carte séparée.

## Description

La présente invention concerne une pièce d'horlogerie telle qu'une montre-bracelet constituant une aide à la navigation pour les aviateurs et les marins. Plus précisément, la présente invention concerne une telle pièce d'horlogerie permettant à un pilote ou à un marin de calculer la correction de cap à apporter à sa trajectoire pour tenir compte d'un vent de travers.

Supposons qu'un pilote d'avion veuille se rendre par la voie des airs d'un premier point à un second et que, sur la route que devra emprunter ce pilote pour relier ces deux points, souffle un vent de travers. Le pilote va devoir appliquer une correction à la trajectoire de son avion pour tenir compte du vent de travers, faute de quoi il dérivera de sa route et ne parviendra pas à relier son point de destination.

Pour calculer cette correction de trajectoire, le pilote dispose actuellement d'un instrument du type abaque de navigation bien connu dans le mode aéronautique. Cette aide à la navigation se présente sous la forme d'un assemblage de trois disques concentriques superposés susceptibles d'être tournés les uns par rapport aux autres et sur lesquels sont reportées des informations relatives à la vitesse de l'avion, au cap magnétique vrai, à la valeur du vent de travers et à la correction angulaire à apporter à la trajectoire de l'avion. Sur le disque supérieur qui est transparent est reporté un abaque qui sert à effectuer une partie des calculs de correction de la trajectoire.

Le pilote d'avion, de même que le navigateur, dispose donc d'un instrument qui lui permet, moyennant un certain nombre de lectures d'indications chiffrées et de calculs, de déterminer la correction du cap à appliquer pour tenir compte d'un vent de travers. On comprend, bien sûr, que le pilote ou le marin doit avoir en permanence cet instrument à portée de la main. Mais cet instrument peut être facilement égaré parmi les nombreuses cartes, documents officiels et autres que le pilote ou le marin doit emporter avec lui. D'autre part, cet instrument de navigation est classiquement réalisé en carton. Il peut donc se salir et s'user.

La présente invention a pour but de remédier aux inconvénients susmentionnés ainsi qu'à d'autres encore en procurant une pièce d'horlogerie à laquelle est associé un instrument de navigation du type abaque tel que décrit ci-dessus.

A cet effet, la présente invention concerne une pièce d'horlogerie, notamment du type montre-bracelet, constituant une aide à la navigation pour les aviateurs ou les navigateurs, caractérisée en ce qu'elle comprend au moins deux lunettes concentriques dont l'une au moins est tournante, l'une de ces lunettes portant des premières indications correspondant à la vitesse d'un avion, respectivement d'un bateau, et l'autre portant des indications relatives à la correction du cap à appliquer en cas de vent de travers, un abaque de calcul de la correction du cap étant reporté sur le dos de la montre ou sur une carte séparée.

Grâce à ces caractéristiques, la présente invention procure une pièce d'horlogerie à laquelle est associé un instrument de navigation du type abaque pour aviateurs et navigateurs. Comme ces derniers portent en permanence une montre au poignet, ils ont ainsi immédiatement à disposition un instrument leur permettant de calculer la correction à apporter à leur trajectoire pour tenir compte d'un éventuel vent de travers. Le risque d'égarer cet instrument parmi d'autres documents est évité. De même, l'invention procure une aide à la navigation qui ne risque pas d'être salie ou détériorée.

Selon une caractéristique complémentaire de l'invention, la pièce d'horlogerie comprend une troisième lunette tournante sur laquelle sont reportés les résultats de la détermination de la correction de cap à appliquer.

L'utilisateur dispose ainsi d'un aide-mémoire qui lui permet de se rappeler des calculs qu'il a effectués et qui lui évite de devoir éventuellement refaire ces calculs qui sont relativement longs et complexes.

D'autres caractéristiques et avantages de la présente invention ressortiront plus clairement de la description détaillée qui suit d'un mode de réalisation de la pièce d'horlogerie selon l'invention, cet exemple étant donné à titre purement illustratif et non limitatif seulement en liaison avec le dessin annexé sur lequel :
- les figures 1A à 1C sont des vues de dessus d'une montre-bracelet conforme à la présente invention à différents stades des calculs de correction de la trajectoire;
- la figure 2 est une représentation d'un abaque utile à la détermination de la correction de cap à appliquer à la trajectoire d'un aéronef ou d'une embarcation et qui peut être reporté sur le dos de la montre ou sur une carte séparée;
- la figure 3 est une représentation schématique d'une variante de réalisation de la montre représentée à la figure 1;
- la figure 4 est une vue en coupe selon la ligne IV-IV de la figure 1, et
- la figure 5 est une vue en coupe selon la ligne V-V de la figure 1.

La présente invention va être décrite en liaison avec une montre-bracelet destinée à être utilisée dans le milieu aéronautique. Il va de soi que la présente invention s'applique de manière analogue au monde maritime, la seule différence résidant dans l'ordre de grandeur des vitesses mises en jeu, la vitesse d'un navire étant bien évidemment bien inférieure à celle d'un aéronef.

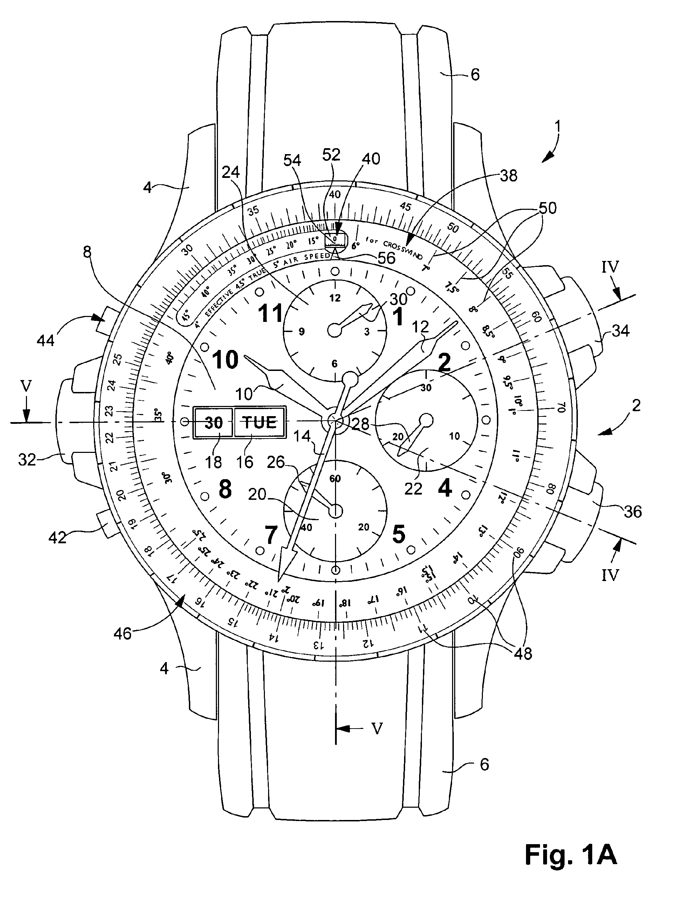

La pièce d'horlogerie représentée en liaison avec la figure 1A est du type montre-bracelet. On comprendra que l'invention n'est pas limitée à une telle montre-bracelet et qu'elle peut s'appliquer à tout type de pièce d'horlogerie telle qu'une montre de poche. Désignée dans son ensemble par la référence numérique générale 1, la montre-bracelet comprend une carrure 2 prolongée à midi et à six heures par deux paires de cornes 4 pour la fixation des brins 6 d'un bracelet.

La montre-bracelet 1 comprend par ailleurs un cadran 8 au-dessus duquel se déplacent une aiguille des heures 10, une aiguille des minutes 12 et une aiguille des secondes 14. Deux guichets 16 et 18 sont pratiqués dans le cadran 8, respectivement pour l'affichage du jour de la semaine et du quantième.

Trois autres petits cadrans 20, 22 et 24 sont ménagés sur le cadran 8 de dimensions plus grandes. Ces cadrans 20, 22 et 24 servent au comptage des secondes, des minutes et des heures lorsqu'une fonction de chronométrage est activée et comprennent chacun à cet effet une aiguille, respectivement 26, 28 et 30.

La montre-bracelet 1 comprend également une couronne 32 disposée à 9 heures pour le réglage des fonctions horlogères. La montre-bracelet 1 comprend d'autre part deux couronnes 34 et 36 disposées respectivement à 2 heures et à 4 heures pour la commande en rotation de deux lunettes rotatives 38 et 40 comme décrit en détail ci-dessous, de même que deux poussoirs 42 et 44 disposés à 8 heures et à 10 heures pour le démarrage, l'arrêt et la remise à zéro de la fonction chronographe.

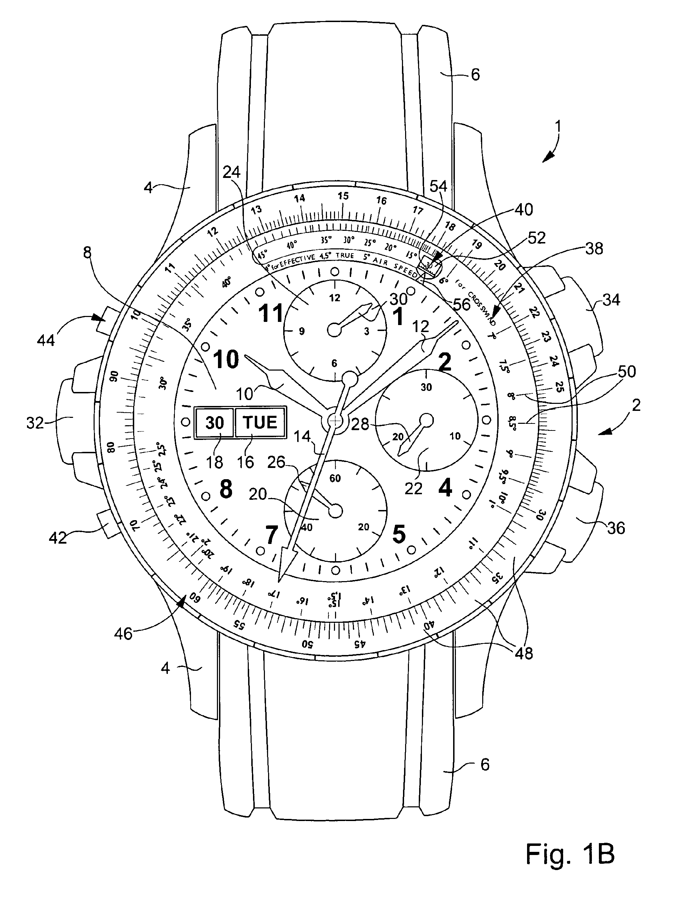

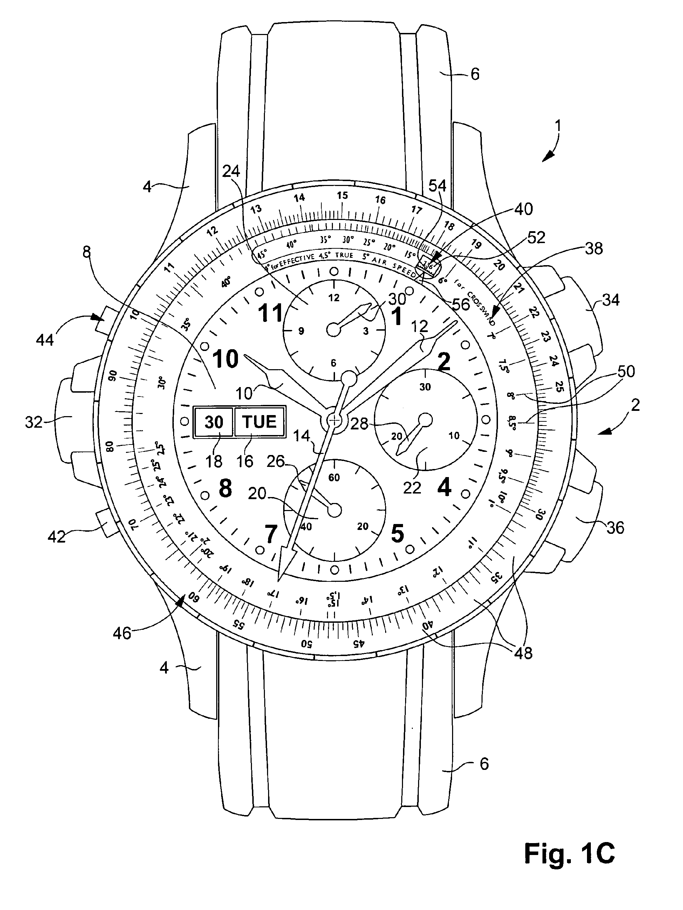

Comme on peut le voir à l'examen de la figure 1, la montre-bracelet 1 selon l'invention est pourvue de trois lunettes rotatives concentriques 38, 40 et 46 sur lesquelles sont reportées des informations relatives à la vitesse de l'avion et à la correction de cap à appliquer.

Plus précisément, la lunette rotative 46 est une lunette extérieure susceptible d'être tournée à la main. Sur cette lunette 46 sont reportées des indications 48 relatives à la vitesse de l'avion. Les vitesses reportées sur la lunette 46 correspondent au dixième de la vitesse réelle de l'avion et sont exprimées en miles nautiques par heure. Ainsi, au nombre "18" marqué sur la lunette 46 correspond une vitesse de l'avion de 180Kts.

Les deux autres lunettes 38 et 40 sont des lunettes rotatives intérieures qui sont commandées en rotation par les couronnes 34 et 36 respectivement. Sur la lunette 38 sont reportées des graduations 50 exprimées en degrés qui correspondent à la correction de cap à appliquer à la trajectoire d'un avion en fonction d'un vent de travers donné. La lunette 38 présente par ailleurs un guichet 52 à travers lequel sont visibles des graduations 54 reportées sur la lunette 40 qui est disposée sous la lunette 38. Les graduations 54 reportées sur la lunette 40 correspondent aux résultats des calculs effectués par l'aviateur pour déterminer la correction de cap à apporter à la trajectoire de son avion compte tenu de la direction du vent de travers. Une fois ses calculs achevés, l'aviateur peut faire apparaître dans le guichet 52 le résultat obtenu en faisant tourner la lunette 40 au moyen de la couronne 36. L'aviateur dispose ainsi d'une fonction de mémorisation des résultats de ses calculs à laquelle il peut se référer à tout moment. Les graduations 54 reportées sur la lunette 40 correspondent à des directions exprimées en degrés comme il va maintenant être décrit en détail.

L'utilisateur doit tout d'abord déterminer au moyen d'une carte géographique la déclinaison magnétique appelée "VAR" à l'endroit où il se trouve. La déclinaison magnétique (VAR) est l'écart entre le nord géographique correspondant à l'orientation des méridiens tracés sur la carte et le nord magnétique indiqué par le compas ou boussole. A titre d'exemple, la déclinaison magnétique est de 4° ouest dans l'ouest de la France et de 1 ° ouest à Genève (Suisse). Si le cap à suivre est par exemple de 140° et que la déclinaison magnétique est de 10° ouest, il faut soustraire la déclinaison magnétique de ce cap, c'est-à-dire le cap 140° - 10° = 130°. Il faut ensuite connaître la force et la direction du vent sur le trajet. Ces informations sont données par la tour de contrôle pour les phases de décollage et d'atterrissage, et par les cartes aériennes pour les vents en altitude. Supposons donc que le vent souffle à 40Kts et que sa direction soit de 100°. On calcule alors la différence entre le cap à suivre (130°) et la direction du vent (100°) et l'on obtient un résultat égal à 130° - 100° = 30°. Le zéro de la graduation 54 reportée sur la lunette 40 étant placé à 12 heures, on fait alors tourner la lunette 38 au moyen de la couronne 34 de façon à faire apparaître dans le guichet 52 le nombre "30" correspondant au résultat du calcul effectué de la manière décrite ci-dessus (voir figure 1 B). L'aviateur peut ainsi temporairement mémoriser ce résultat intermédiaire. En outre, l'aviateur dispose d'un repère 56, par exemple sous la forme d'une flèche, matérialisé sur la lunette 38 au niveau du guichet 52. Ce repère donne à l'aviateur une indication quant à la direction du vent. En effet, on admet par défaut que la route à suivre est à 12h. Dès lors, il est très utile de toujours avoir en vol une indication de la direction du vent par rapport au cap à suivre et de pouvoir ainsi, d'un simple coup d'oeil, déterminer si le vent est favorable ou non. Ceci est particulièrement important pour le calcul du temps de vol ou de la consommation en carburant.

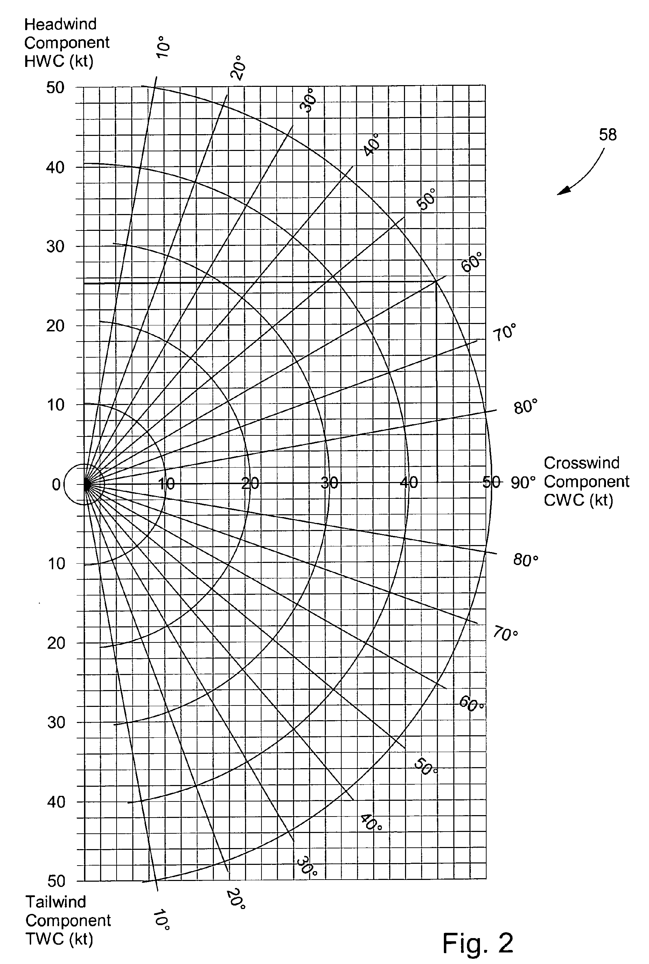

Supposons maintenant que la vitesse réelle de l'avion soit de 180Kts. L'utilisateur va tourner à la main la lunette rotative extérieure 46 pour amener le nombre "18" en regard du repère 56. Il faut ensuite se reporter à l'abaque 58 (voir figure 2) qui peut être prévu sur le dos de la montre ou sur une carte séparée. Sur l'arc de cercle le plus extérieur figurent les composantes du vent de travers. On soustrait la valeur de 30° calculée précédemment de la valeur 90° et on obtient 60°. On décompose ce point dans un repère des vitesses orthonormé. La projection de ce point sur l'axe des abscisses donne une valeur de 25Kts et la projection du même point sur l'axe des ordonnées donne une valeur de 44Kts. On additionne la vitesse de l'avion au chiffre précédent soit 180 + 25 = 205Kts. Sur la lunette 46 on lit la valeur 205Kts qui correspond à peu de chose près au chiffre "20" lorsque cette valeur est rapportée au dixième, et on lit le chiffre correspondant en regard sur la lunette 38, soit environ 6,5°. On additionne cette composante de vent de travers de 6,5° à la valeur du cap magnétique vrai égale à 130° et on obtient ainsi un cap réel de 136,5° qui correspond au cap à suivre par le pilote en tenant compte du vent de travers. Pour mémoire, on peut faire apparaître le résultat de ce calcul (136,5°) dans le guichet 52 en faisant tourner la lunette 40 au moyen de la couronne 36. L'utilisateur dispose ainsi d'un aide-mémoire qui lui permet de se rappeler du résultat définitif des calculs auxquels il a procédé (voir figure 1 C).

Dans tout ce qui vient d'être décrit jusqu'à présent, la lunette 38 est prévue rotative, ceci pour permettre à l'utilisateur de mémoriser temporairement la différence entre le cap magnétique vrai et la direction du vent de travers. Cependant, selon une variante d'exécution simplifiée de l'invention, la lunette 38 pourra être prévue fixe, ne permettant donc de mémoriser que le résultat final des calculs auxquels s'est livré l'aviateur, à savoir le cap à suivre par le pilote pour tenir compte du vent de travers.

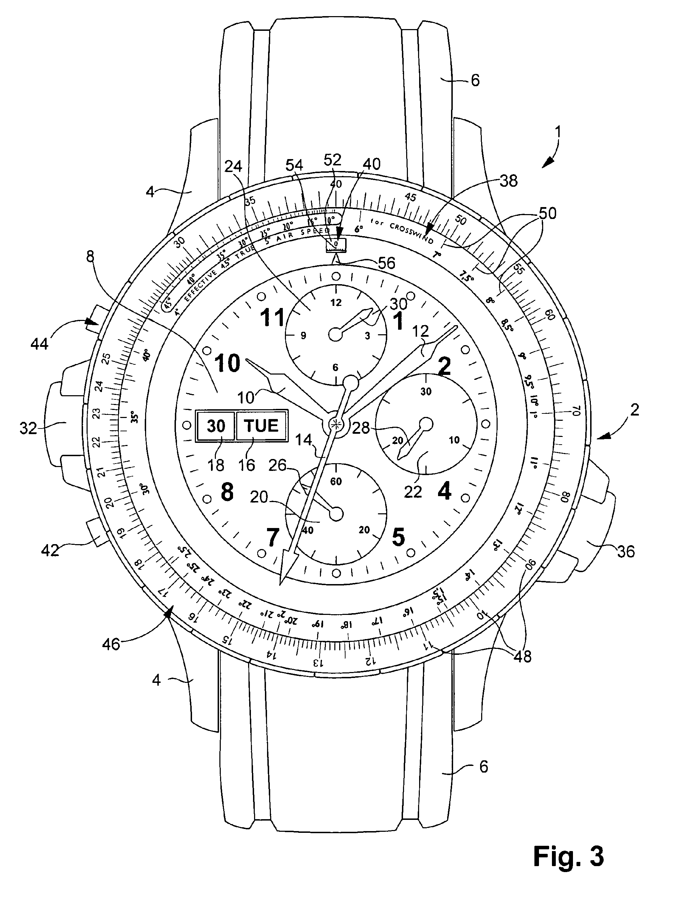

Dans l'exemple illustré aux figures 1A à 1C, la montre 1 selon l'invention comprend une lunette extérieure 46 et deux lunettes intérieures respectivement supérieure 38 et inférieure 40. Bien entendu, cet exemple est donné à titre purement illustratif seulement et l'on pourrait également prévoir deux lunettes rotatives extérieures 46a, 38a et une seule lunette rotative intérieure 40a comme représenté schématiquement à la figure 3.

On comprendra que l'on entend par lunette intérieure une lunette disposée sous la glace 60 de la montre 1, tandis que l'on désigne par lunette extérieure une lunette disposée autour de la glace 60.

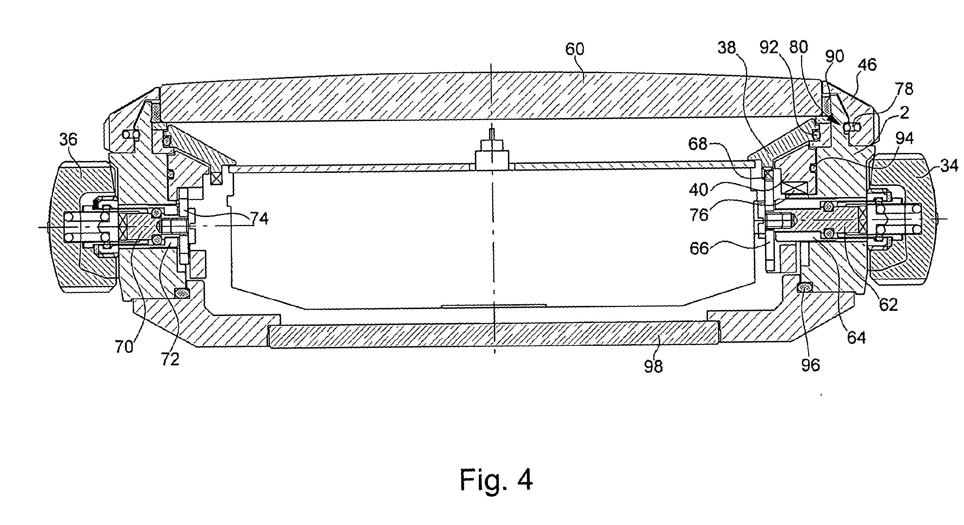

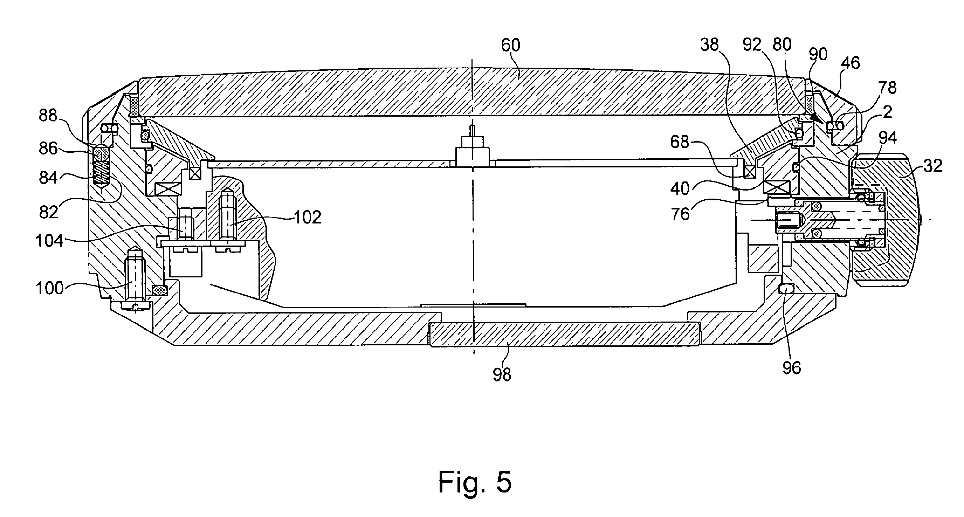

Les figures 4 et 5 sont des vues en coupe de la montre-bracelet 1 respectivement selon la ligne IV-IV et la ligne V-V de la figure 1.

La couronne 34 est montée à l'extrémité d'une tige 62 qui est engagée dans un trou traversant 64 ménagé à 2 heures dans la carrure 2 de la montre 1. Cette tige 62 porte à son extrémité libre un pignon denté 66 destiné à engrener avec les dents 68 prévues à la base de la lunette 38. De même, la couronne 36 est montée à l'extrémité d'une tige 70 qui est engagée dans un trou traversant 72 ménagé à 4 heures dans la carrure 2 de la montre 1 et qui porte à son extrémité libre une pignon denté 74 destiné à engrener avec les dents 76 prévues à la base de la lunette 40.

Une bague élastique 78, disposée dans une gorge circulaire 80 pratiquée pour partie dans la carrure 2 et pour partie dans la lunette extérieure 46, est destinée à permettre à ladite lunette 46 de tourner relativement à ladite carrure 2 sans blesser cette dernière. On pratique également au moins un et, préférentiellement, deux trous borgnes 82 diamétralement opposés dans la carrure 2. Dans chacun de ces trous borgnes 82 est disposé un ressort 84 légèrement comprimé et surmonté d'une bille 86 qui vient se loger dans une cavité correspondante 88 prévue à la base de la lunette extérieure 46. Ce dispositif constitue une limitation à la rotation de la lunette 46 pour empêcher celle-ci de tourner trop facilement. Un joint d'étanchéité 90 est disposé entre la glace 60 et la carrure 2 de même que des joints 92 et 94 sont disposés entre chacune des lunettes rotatives 38 et 40 et ladite carrure 2. Un joint 96 est également prévu entre le fond 98 de la montre 1 et la carrure 2. Le fond 98 peut par exemple être vissé sur la carrure 2 au moyen de vis 100. Enfin, des vis 102 et 104 sont prévues pour le montage du mouvement et de son cercle d'encageage.

Il va de soi que la présente invention n'est pas limitée au mode de réalisation qui vient d'être décrit et que diverses modifications et variantes simples peuvent être envisagées par l'homme du métier sans sortir du cadre de la présente invention tel que défini par les revendications annexées à la présente demande de brevet.

## Revendications

1. Pièce d'horlogerie, notamment du type montre-bracelet (1), constituant une aide à la navigation pour les aviateurs ou les navigateurs, **caractérisée en ce qu'**elle comprend au moins deux lunettes concentriques (38, 46) dont l'une (46) au moins est tournante, l'une de ces lunettes (46) portant des premières indications (48) correspondant à la vitesse d'un avion, respectivement d'un bateau, et l'autre (38) portant des indications (50) relatives à la correction du cap à appliquer en cas de vent de travers, un abaque (58) de calcul de la correction du cap étant reporté sur le dos de la montre (1) ou sur une carte séparée.

2. Pièce d'horlogerie selon la revendication 1, **caractérisée en ce que** la lunette (38) est également tournante.

3. Pièce d'horlogerie selon l'une quelconque des revendications 1 ou 2, **caractérisée en ce que** la lunette (46) est une lunette extérieure disposée autour de la glace (60) de la montre (1), et **en ce que** la lunette (38) est une lunette intérieure disposée sous ladite glace (60).

4. Pièce d'horlogerie selon l'une quelconque des revendications 1 ou 2, **caractérisée en ce que** les lunettes (38, 46) sont des lunettes extérieures disposées autour de la glace (60) de la montre (1).

5. Pièce d'horlogerie selon l'une quelconque des revendications 1 à 4, **caractérisée en ce qu'**elle comprend une troisième lunette tournante (40) sur laquelle sont reportées des indications (54) correspondant aux résultats des calculs effectués pour déterminer la correction de cap à apporter à la trajectoire de l'avion ou du bateau.

6. Pièce d'horlogerie selon la revendication 5, **caractérisée en ce que** la lunette (40) est disposée sous la lunette (38) qui comprend un guichet (52) à travers lequel sont visibles les indications (54) reportées sur ladite lunette (40).

7. Pièce d'horlogerie selon l'une quelconque des revendications 1 à 6, **caractérisée en ce qu'**une bague élastique (78) est disposée dans une gorge circulaire (80) pratiquée pour partie dans la carrure (2) et pour partie dans la lunette extérieure (46).

8. Pièce d'horlogerie selon l'une quelconque des revendications 1 à 7, **caractérisée en ce que**, dans au moins un trou borgne (82) pratiqué dans la carrure (2), est disposé un ressort (84) surmonté d'une bille (86) qui vient se loger dans une cavité correspondante (88) prévue à la base de la lunette extérieure (46).

9. Pièce d'horlogerie selon l'une quelconque des revendications 1 à 8, **caractérisée en ce que** la lunette (38) porte un repère (56) qui donne une indication de la direction du vent par rapport au cap à suivre.
